Europäisches Patentamt

European Patent Office

Office européen des brevets

(19)

(11) **EP 1 377 521 B1**

(12) **EUROPÄISCHE PATENTSCHRIFT**

(45) Veröffentlichungstag und Bekanntmachung des Hinweises auf die Patenterteilung:
**05.01.2005   Patentblatt 2005/01**

(51) Int Cl.[7]: **C01F 13/00**, C01F 11/46, G21F 9/30

(21) Anmeldenummer: 02727289.7

(22) Anmeldetag: **05.04.2002**

(86) Internationale Anmeldenummer:
**PCT/DE2002/001240**

(87) Internationale Veröffentlichungsnummer:
**WO 2002/083565 (24.10.2002 Gazette 2002/43)**

(54) **VERFAHREN ZUR ANREICHERUNG VON RADIUM AUS BARIUMSULFATHALTIGEN MINERALSTOFFGEMISCHEN**

METHOD FOR ENRICHING RADIUM FROM MIXTURES OF MINERAL SUBSTANCES CONTAINING BARIUM SULFATE

PROCEDE D'ENRICHISSEMENT DE RADIUM PROVENANT DE MELANGES DE SUBSTANCES MINERALES CONTENANT DU SULFATE DE BARYUM

(84) Benannte Vertragsstaaten:
**AT BE CH CY DE DK ES FI FR GB GR IE IT LI LU MC NL PT SE TR**

(30) Priorität: **11.04.2001   DE 10118259**

(43) Veröffentlichungstag der Anmeldung:
**07.01.2004   Patentblatt 2004/02**

(73) Patentinhaber: **GKSS-Forschungszentrum Geesthacht GmbH 21502 Geesthacht (DE)**

(72) Erfinder:
• **LUTHER, Günter D-21502 Geesthacht (DE)**
• **SÖDING, Zita 22885 Barsbüttel (DE)**

(74) Vertreter: **Niedmers, Ole propindus Patentanwälte NIEDMERS JAEGER KÖSTER Van der-Smissen-Strasse 3 22767 Hamburg (DE)**

(56) Entgegenhaltungen:
**EP-A- 0 550 221        WO-A-02/13202
DE-A- 3 706 533        FR-A- 455 189**

## Beschreibung

Die Erfindung betrifft ein Verfahren zur Anreicherung von Radium aus bariumsulfathaltigen Mineralstoffgemischen mit komplex an das Bariumsulfat gebundenem Radium, bei dem das bariumsulfathaltige Mineralstoffgemisch durch Zugabe von Kohlenstoff enthaltenden Gemischen thermisch zu Bariumsulfid reduziert wird.

Ein Verfahren dieser Art ist bekannt (FR-PS 455 189).

Im Off-shore-Bereich wird Bohrschlamm für das Bohren nach Öl und Erdgas benötigt, mit dessen Hilfe das Bohrgestänge geschmiert und das Bohrloch stabilisiert werden. Der Bohrschlamm besteht im wesentlichen aus Tonmineralien, Bariumsulfat, öl und Wasser und dem geförderten Bohrklein, wobei sich die Anteile entsprechend dem Bohrverlauf ändern. Ein Teil der im Gestein befindlichen natürlichen Radioaktivität wird beim Bohren mit dem Bohrschlamm an die Oberfläche transportiert und an unterschiedlichen Stellen nachfolgender Verfahrensstufen abgelagert. Mit dem Erdöl wird neben Sedimenten auch natürliche Radioaktivität an die Oberfläche gefördert.

Die natürliche Radioaktivität ist im wesentlichen komplex an das Bariumsulfat gebunden. Die Strahlungsintensität des dabei anfallenden Mineraliengemisches liegt zwischen 1 Bq/g und 100 Bq/g. Dieses sogenannte NORM-Material (Natural Occuring Radioactive Material) darf nicht in einer normalen Deponie gelagert werden. Dieses NORM-Material ist Sondermüll und müßte entsprechend der Radioaktivität in teuren Zwischenlagern deponiert werden. International werden als Grenzwerte für die Unterbringung auf Normaldeponien je 10 Bq/g für $Ra^{226}$ und $Ra^{228}$ angestrebt.

Es ist somit Aufgabe der vorliegenden Erfindung, ein Verfahren der eingangs genannten Art zu schaffen, mit dem auf sehr effektive Weise Radium in einer mengenmäßig kleinen Fraktion angereichert werden kann und mit dem die Radioaktivität der abgereicherten Fraktion deutlich reduziert werden kann, wobei das Verfahren einfach und kostengünstig durchführbar ist und lediglich geringe Mengen im Vergleich zu bisherigen Mengen an der mit Radium angereicherten Fraktion deponiert oder einer anderweitigen Verwendung zugeführt werden müssen.

Gelöst wird die Aufgabe gemäß der Erfindung dadurch, daß

a. das entstandene Feststoffgemisch mit Wasser versetzt und bis zur Lösung des Bariumsulfids gerührt wird, und daß man dann

b. den nahezu wasserunlöslichen, an Radium angereicherten Bariumsulfatrückstand vom in Wasser gelösten Bariumsulfid mechanisch abtrennt.

Der Vorteil der erfindungsgemäßen Lösung besteht im wesentlichen darin, daß erfindungsgemäß, wie angestrebt, lediglich geringe Zwischen- bzw. Endlagerkapazitäten für die mengenmäßig kleine, mit Radium angereicherten Fraktion bereitgestellt werden müssen, wodurch es ebenfalls zu erheblichen Kosteneinsparungen kommt, was einerseits für den Transport in die Lager bedingt ist und andererseits für den erfindungsgemäßen Zweck lediglich geringe Aufwendungen für die Lagerkapazitäten getroffen werden müssen.

Die thermische Reduzierung des Mineralstoffgemischs zu Bariumsulfid erfolgt vorzugsweise bei einer Temperatur von 600°C bis 1.000°C, wobei diese thermische Reduktion vorzugsweise unter einer Inertgasatmosphäre, beispielsweise einer $N_2$-Atmosphäre, erfolgt. Grundsätzlich sind auch andere Inertgase als Stickstoff bzw. andere Inertgasgemische für den Inertisierungsvorgang heranziehbar.

Vorzugsweise wird das erhitzte Feststoffgemisch unmittelbar mit Wasser versetzt, wodurch der Lösungsvorgang gegebenenfalls vorzugsweise verkürzt werden kann und ein größerer Teil an Bariumsulfid gelöst wird als im unerhitzten Zustand.

Gemäß einer weiteren vorteilhaften Ausgestaltung der Erfindung wird das Bariumsulfid durch Zugabe von sauerstoffhaltigen Gasen oxidiert und das aus der Oxidation stammende, gereinigt Mineralstoffgemisch vom Prozeßwasser abgetrennt, wobei das Prozeßwasser vorzugsweise erneut in der Stufe gemäß Verfahrensschritt b. eingesetzt werden kann, d. h., daß das Prozeßwasser lediglich für den Gesamtverfahrensprozeß herangezogen werden kann und lediglich geringfügige Mengen durch Zugabe von Wasser ersetzt zu werden brauchen.

Es ist aber vorteilhafterweise auch möglich, das Prozeßwasser, das am Ende des erfindungsgemäßen Verfahrens austritt, als gereinigtes Abwasser abzuführen.

Vorteilhaft ist es ebenfalls, den mit Radium angereicherten Bariumsulfatrückstand partiell oder ganz in den Kreislauf zur weiteren Anreicherung der thermischen Reduktion erneut zuzuführen, so daß praktisch nur eine extrem geringe Menge von mit Radium angereichertem Bariumsulfatrückstand den Verfahrensprozeß verläßt.

Versuche haben ergeben, daß bei der erfindungsgemäßen Verfahrensführung das gereinigte Mineralstoffgemisch einen Anteil von 10 Bq/g unterschreitet, so daß dieses Mineralstoffgemisch auf Normaldeponien abgelagert werden kann.

Ganz besonders vorteilhaft ist es schließlich, daß das bariumsulfathaltige Mineralstoffgemisch vor Ausführung der Verfahrensschritte a. und b. in wenigstens einem vorgeschalteten Trennprozeß von Tonmineralien und/oder Öl und/oder Wasser getrennt wird, so daß schon ein mit Bariumsulfat hochangereichertes, natürlich strahlendes Material für die verfahrensgemäße weitere Anreicherung vorliegt, so daß das Verfahren noch effektiver betrieben werden kann.

Die Erfindung wird nun unter Bezugnahme auf die nachfolgenden schematischen Zeichnungen anhand eines Ausführungsbeispiels im einzelnen beschrieben. Darin zeigen:

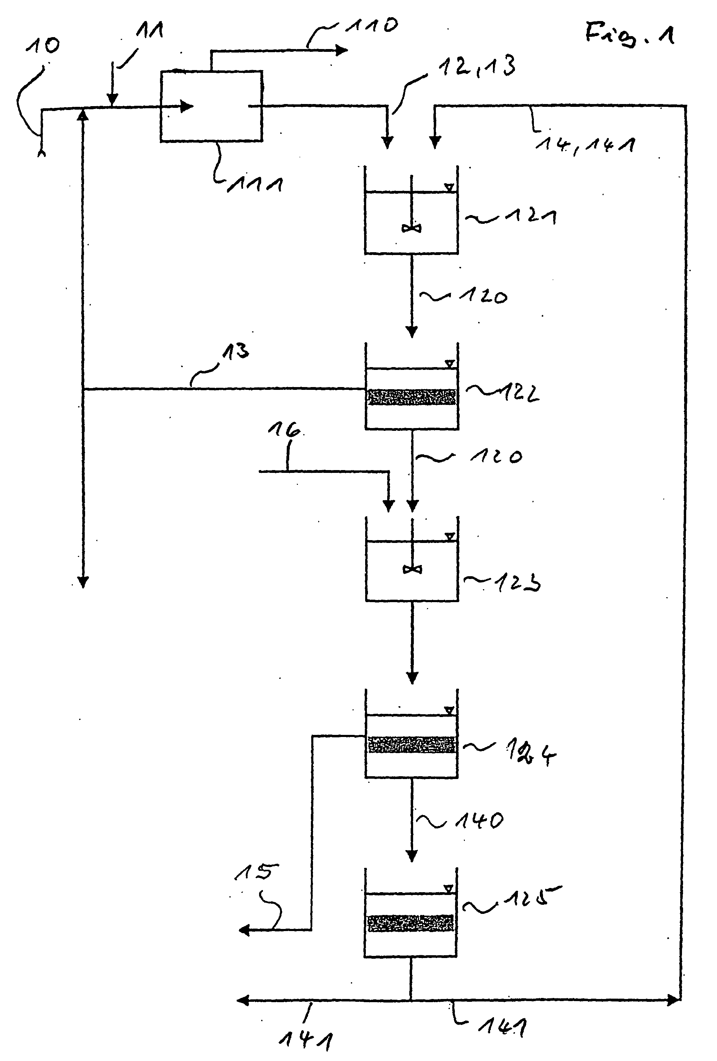

Fig. 1     in Form eines Blockschaltgebildes in stark schematisierter Form die einzelnen Verfahrensstufen zur Darstellung der einzelnen Verfahrensschritte,

Fig. 2     in Form eines Fließschemas eine Erläuterung zu einer meßtechnischen Erfassung von Ra[228] und Ra[226] zur Überprüfung der gemäß dem erfindungsgemäßen Verfahren erzielten Trennergebnisse und

Fig. 3     eine Tabelle, die die Aktivitäten der $BaSO_4$-Rückstände und des angedampften BaS-Rückstandes zeigt.

Das bariumsulfathaltige Mineralstoffgemisch 10 wird zur Anreicherung seines Radiumgehalts auf einen Erhitzer 111 gegeben. Gleichzeitig wird dem Mineralstoffgemisch 10 Kohlenstoff 11 zugeführt. Im Erhitzer 111 wird unter Inertgasatmosphäre, beispielsweise in Form einer $N_2$-Atmosphäre, bei Temperaturen zwischen 600°C bis 1.000°C das mit Bariumsulfat angereicherte Mineralstoffgemisch (NORM-Material) reduziert. Bei der Reduktion wird Kohlendioxid ($CO_2$) und Bariumsulfid (BaS) gebildet. Bariumsulfid 12 liegt am Ausgang des Erhitzers 111 als Feststoff vor. Kohlendioxid 110 wird abgeführt.

Die Reaktionsformel entsprechend der im Erhitzer 111 ablaufenden Reaktion lautet:

$$BaSO_4 + 2C = BaS + 2CO_2.$$

Das Feststoffgemisch 13, das Bariumsulfid 12 enthält, wird auf einen Mischer 121 gegeben, dem ebenfalls Wasser 14, gegebenenfalls auch Prozeßwasser 140, das aus dem erfindungsgemäßen Verfahrenskreislauf stammt, zugeführt.

Das Bariumsulfid 12 löst sich in Wasser 14 bzw. 140. Im nachgeschalteten Filter 122 werden die Feststoffe mechanisch von der Bariumsulfidlösung 120 getrennt. Das flüssige gelöste Bariumsulfid 120 fließt in einen nachgeschalteten Oxidationsreaktor 123. Das vom Filter 112 abgeschöpfte, radiumangereicherte Feststoffgemisch 13 wird gegebenenfalls, wenn die Radiumanreicherung für die Verfahrensführung nicht ausreichend ist, erneut den zur Anreicherung von Radium bestimmten primären NORM-Gemisch 10 zugeführt.

Im Oxidationsreaktor 123, dem Sauerstoff 16 zugeführt wird, rückoxidiert das Bariumsulfid der Bariumsulfidlösung 120 wieder zu Bariumsulfat. Ist das auf den Eingang 111 zugeführte Mineralstoffgemisch 11 in bezug auf den Radiumgehalt ausreichend angereichert, wird das radioaktive Mineralstoffgemisch 13 dem Verfahren entzogen und kann zum Beispiel in einem Zwischenlager für schwach radioaktiven Abfall deponiert werden.

Das Gemisch aus dem Oxidationsreaktor 123 wird über einen nachgeschalteten Filter 124 geleitet. Danach ergibt sich ein gereinigtes Mineralstoffgemisch 15, welches erneut im Zuge der Durchführung von Bohrungen nach Erdöl und Erdgas eingesetzt werden kann, und das Prozeßwasser 140, das in einer nachgeschalteten Wasserreinigungseinrichtung 125 soweit aufbereitet werden kann, daß es wieder als gereinigtes Abwasser 141 entweder abgeführt oder als Kreislaufwasser 140 erneut dem Mischer 121 zugeführt werden kann.

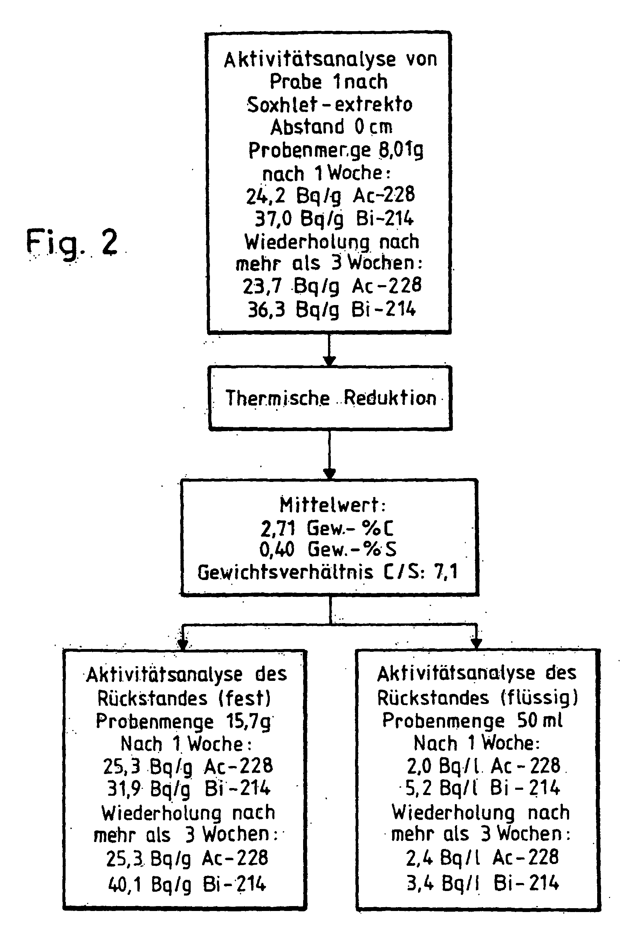

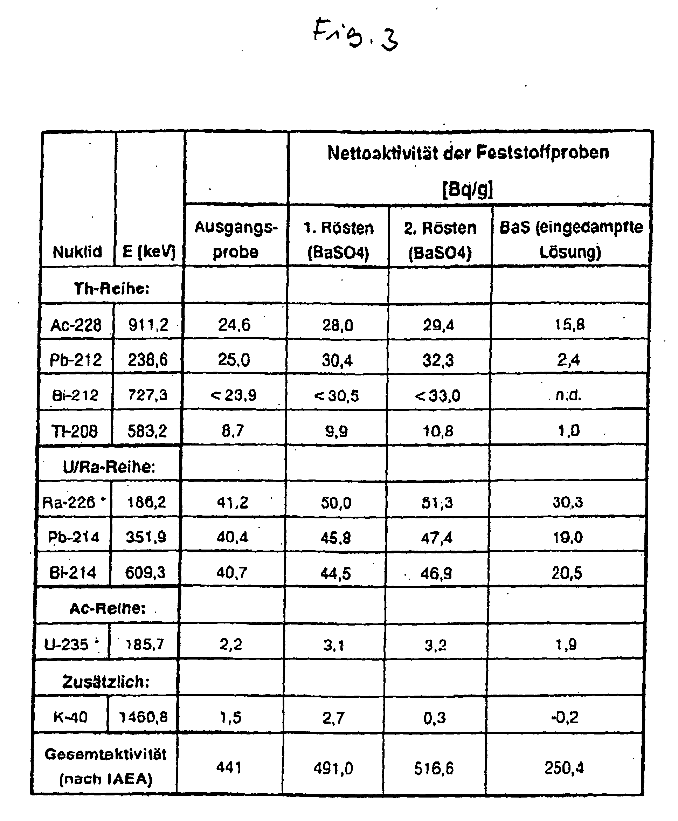

Unter Bezugnahme auf die Darstellungen von Fig. 2 sowie die Tabelle gemäß Fig. 3 sei erwähnt, daß es meßtechnisch sehr schwierig ist, Ra[226] und Ra[228] zu erfassen. Es ist daher üblich, den Radiumgehalt in Gemischen über Aktinium[228] und Wismut[214] zu messen. Wegen der entstehenden Halbwertzeiten muß wenigstens drei Wochen gewartet werden, um ein Gleichgewicht zwischen Aktinium-Radium- bzw. Wismut-Radium- Gehalten zu erreichen. Danach entsprechen die Gehalte von Aktinium und Wismut denen des Radiums. Es wurde erfindungsgemäß eine Anreicherung von 10 % erreicht. Das entspricht molar ca. der Menge des zugeführten Kohlenstoffs.

Unter Bezugnahme auf die Tabelle gemäß Fig. 3 sei erwähnt, daß die Auflösung des verwendeten Detektors nicht groß genug ist, um die Peaks von Ra[226] und U[235] zu trennen.

### Bezugszeichenliste

| | |
|---|---|
| 10 | Mineralstoffgemisch |
| 100 | Mineralstoffgemisch |
| 11 | Kohlenstoff |
| 110 | Kohlendioxid |
| 111 | Erhitzer |
| 12 | Bariumsulfid |
| 120 | Bariumsulfid (gelöst) |
| 121 | Mischer |
| 122 | Filter |
| 123 | Oxidationsreaktor |
| 124 | Filter |
| 125 | Wasserreinigungseinrichtung |
| 13 | Feststoffgemisch |
| 14 | Wasser |
| 140 | Prozeßwasser |
| 141 | gereinigtes Abwasser |
| 15 | Mineralstoffgemisch (fest) |
| 16 | Sauerstoff |

**Patentansprüche**

1. Verfahren zur Anreicherung von Radium aus bariumsulfathaltigen Mineralstoffgemischen mit komplex an das Bariumsulfat gebundenem Radium, bei dem das bariumsulfathaltige Mineralstoffgemisch durch Zugabe von Kohlenstoff enthaltenden Gemischen thermisch zu Bariumsulfid reduziert wird, **dadurch gekennzeichnet, daß**

   a. das entstandene Feststoffgemisch mit Wasser versetzt und bis zur Lösung des Bariumsulfids gerührt wird und daß man dann

   b. den nahezu wasserunlöslichen, an Radium angereicherten Bariumsulfatrückstand vom in Wasser gelösten Bariumsulfid mechanisch abtrennt.

2. Verfahren nach Anspruch 1, **dadurch gekennzeichnet, daß** die thermische Reduktion bei einer Temperatur von 600°C bis 1.000°C ausgeführt wird.

3. Verfahren nach einem oder beiden der Ansprüche 1 oder 2, **dadurch gekennzeichnet, daß** das erhitzte Feststoffgemisch unmittelbar mit Wasser versetzt wird.

4. Verfahren nach einem oder mehreren der Ansprüche 1 bis 3, **dadurch gekennzeichnet, daß** das Bariumsulfid durch Zugabe von sauerstoffhaltigen Gasen oxidiert wird und das aus der Oxidation stammende, gereinigte Mineralstoffgemisch vom Prozeßwasser abgetrennt wird.

5. Verfahren nach einem oder mehreren der Ansprüche 1 bis 4, **dadurch gekennzeichnet, daß** der mit Radium angereicherte Bariumsulfatrückstand partiell oder ganz im Kreislauf zur weiteren Anreicherung der thermischen Reaktion erneut zugeführt wird.

6. Verfahren nach Anspruch 4, **dadurch gekennzeichnet, daß** das gereinigte Mineralstoffgemisch einen Anteil von 10 Bq/g unterschreitet.

7. Verfahren nach Anspruch 4, **dadurch gekennzeichnet, daß** das Prozeßwasser erneut in der Stufe gemäß Verfahrensschritt b. eingesetzt wird.

8. Verfahren nach einem oder mehreren der Ansprüche 1 bis 7, **dadurch gekennzeichnet, daß** das bariumsulfathaltige Mineralstoffgemisch vor Ausführung der Verfahrensschritte a. und b. in wenigstens einem vorgeschalteten Trennprozeß von Tonmineralen und/oder Öl und/oder Wasser getrennt wird.

**Claims**

1. Method of concentrating radium from mixtures of mineral substances containing barium sulphate incorporating radium complexly bonded to the barium sulphate, whereby the mixture of mineral substances containing barium sulphate is thermally reduced to barium sulphide by adding mixtures containing carbon, **characterised in that**

   a. the resultant mixture of solid substances mixture is displaced with water and stirred until the barium sulphide has dissolved and

   b. the virtually water-insoluble barium sulphate residue incorporating concentrated radium is mechanically separated from the barium sulphide dissolved in water.

2. Method as claimed in claim 1, **characterised in that** the thermal reduction is operated at a temperature of 600°C to 1,000°C.

3. Method as claimed in one or both of claims 1 or 2, **characterised in that** the heated mixture of solid substances is directly displaced with water.

4. Method as claimed in one or more of claims 1 to 3, **characterised in that** the barium sulphide is oxidised by adding gases containing oxygen and the cleaned mixture of mineral substances resulting from the oxidation process is separated from the process water.

5. Method as claimed in one or more of claims 1 to 4, **characterised in that** some or all of the barium sulphate residue incorporating concentrated radium is fed back through the circuit again for further concentration in the thermal reaction.

6. Method as claimed in claim 4, **characterised in that** the cleaned mixture of mineral substances accounts for a proportion of less than 10 Bq/g.

7. Method as claimed in claim 4, **characterised in that** the process water is used again in the process operated at method step b.

8. Method as claimed in one or more of claims 1 to 7, **characterised in that** the mixture of mineral substances containing barium sulphate is separated from clay minerals and/or oil and/or water in at least one downstream separation process prior to running method steps a. and b.

**Revendications**

1. Procédé d'enrichissement du radium à partir de mélanges de matières minérales contenant du sulfate de baryum avec du radium lié de manière complexe au sulfate de baryum, dans lequel le mélange de matières minérales contenant du sulfate de baryum subit une réduction thermique en sulfure de baryum par addition de mélanges contenant du carbone, **caractérisé en ce que** :

   a. on ajoute le mélange de matières solides résultant à l'eau et on agite jusqu'à dissolution du sulfure de baryum et **en ce que**, ensuite,
   b. on sépare mécaniquement le résidu de sulfate de baryum enrichi en radium, presque insoluble dans l'eau, du sulfure de baryum dissous dans l'eau.

2. Procédé selon la revendication 1, **caractérisé en ce que** la réduction thermique est effectuée à une température de 600°C à 1000°C.

3. Procédé selon une ou deux des revendications 1 ou 2, **caractérisé en ce que** le mélange de matières solides chauffé est immédiatement mélangé à l'eau.

4. Procédé selon une ou plusieurs des revendications 1 à 3, **caractérisé en ce que** le sulfure de baryum est oxydé par addition de gaz contenant de l'oxygène et que le mélange de matières minérales purifié, provenant de l'oxydation, est séparé de l'eau de procédé.

5. Procédé selon une ou plusieurs des revendications 1 à 4, **caractérisé en ce que** le résidu de sulfate de baryum enrichi en radium est de nouveau amené partiellement ou entièrement à la réaction thermique dans le circuit pour un enrichissement ultérieur.

6. Procédé selon la revendication 4, **caractérisé en ce que** le mélange de matières minérales purifié se situe en dessous d'une proportion de 10 Bq/g.

7. Procédé selon la revendication 4, **caractérisé en ce que** l'eau de procédé est de nouveau mise en oeuvre dans l'étape de procédé b.

8. Procédé selon une ou plusieurs des revendications 1 à 7, **caractérisé en ce que** le mélange de matières minérales contenant du sulfate de baryum est séparé des minéraux argileux et/ou de l'huile et/ou de l'eau avant l'exécution des étapes de procédé a. et b. dans au moins un procédé de séparation antéposé.

Fig. 1

Fig. 2

Aktivitätsanalyse von
Probe 1 nach
Soxhlet-extrekto
Abstand 0 cm
Probenmenge 8,01g
nach 1 Woche:
24,2 Bq/g Ac-228
37,0 Bq/g Bi-214
Wiederholung nach
mehr als 3 Wochen:
23,7 Bq/g Ac-228
36,3 Bq/g Bi-214

Thermische Reduktion

Mittelwert:
2,71 Gew.-%C
0,40 Gew.-%S
Gewichtsverhältnis C/S: 7,1

Aktivitätsanalyse des
Rückstandes (fest)
Probenmenge 15,7g
Nach 1 Woche:
25,3 Bq/g Ac-228
31,9 Bq/g Bi-214
Wiederholung nach
mehr als 3 Wochen:
25,3 Bq/g Ac-228
40,1 Bq/g Bi-214

Aktivitätsanalyse des
Rückstandes (flüssig)
Probenmenge 50 ml
Nach 1 Woche:
2,0 Bq/l Ac-228
5,2 Bq/l Bi-214
Wiederholung nach
mehr als 3 Wochen:
2,4 Bq/l Ac-228
3,4 Bq/l Bi-214

Fig. 3

| Nuklid | E [keV] | Ausgangs-probe | Nettoaktivität der Feststoffproben [Bq/g] | | |
|---|---|---|---|---|---|
| | | | 1. Rösten (BaSO4) | 2. Rösten (BaSO4) | BaS (eingedampfte Lösung) |
| Th-Reihe: | | | | | |
| Ac-228 | 911,2 | 24,6 | 28,0 | 29,4 | 15,8 |
| Pb-212 | 238,6 | 25,0 | 30,4 | 32,3 | 2,4 |
| Bi-212 | 727,3 | < 23,9 | < 30,5 | < 33,0 | n.d. |
| Tl-208 | 583,2 | 8,7 | 9,9 | 10,8 | 1,0 |
| U/Ra-Reihe: | | | | | |
| Ra-226 | 186,2 | 41,2 | 50,0 | 51,3 | 30,3 |
| Pb-214 | 351,9 | 40,4 | 45,8 | 47,4 | 19,0 |
| Bi-214 | 609,3 | 40,7 | 44,5 | 46,9 | 20,5 |
| Ac-Reihe: | | | | | |
| U-235 | 185,7 | 2,2 | 3,1 | 3,2 | 1,9 |
| Zusätzlich: | | | | | |
| K-40 | 1460,8 | 1,5 | 2,7 | 0,3 | -0,2 |
| Gesamtaktivität (nach IAEA) | | 441 | 491,0 | 516,6 | 250,4 |